Europäisches Patentamt

(19) **European Patent Office** (11) Publication number: **0 045 212**
**B1**

Office européen des brevets

(12) **EUROPEAN PATENT SPECIFICATION**

(45) Date of publication of the patent specification: (51) Int. Cl.³: **H 01 R 4/70, B 29 C 25/00**
18.04.84

(21) Application number: **81303442.8**

(22) Date of filing: **27.07.81**

(54) Heat-recoverable article and process for producing the same.

| | |
|---|---|
| (30) Priority: **28.07.80 GB 8024622** | (73) Proprietor: **RAYCHEM LIMITED, ROLLS HOUSE 7, Rolls Buildings Fetter Lane, London, EC4 1NL (GB)** |
| (43) Date of publication of application: **03.02.82 Bulletin 82/5** | (72) Inventor: **Changani, Pushpkumar, Ila Dores Road, Upper Stratton Swindon Wiltshire (GB)** Inventor: **Peacock, Donald George, Paradise Cottage, Kempsford Gloucestershire (GB)** Inventor: **Roberts, David, Stonestack 10, Crabtree Drive, Givons Grove Leatherhead Surrey (GB)** |
| (45) Publication of the grant of the patent: **18.04.84 Bulletin 84/16** | |
| (84) Designated Contracting States: **AT BE CH DE FR IT LI NL SE** | (74) Representative: **Jay, Anthony William et al, Raychem Limited Patent & Legal Department Faraday Road Dorcan, Swindon Wiltshire (GB)** |
| (56) References cited: **FR - A - 2 004 578** **FR - A - 2 114 005** **FR - A - 2 374 463** **FR - A - 2 444 392** **GB - A - 1 046 367** **GB - A - 1 178 166** **GB - A - 2 025 157** **US - A - 3 022 543** **US - A - 3 949 110** | |

ACTORUM AG

Heat-recoverable article and process for producing the same

The present invention concerns hollow heat-recoverable polymeric articles, the dimensional configuration of which may be made to change by subjecting to heat, and in particular, to such articles provided with a functional insert such as an adhesive, sealant, electrically conductive or semi-conductive material or solder insert and to a process for the manufacture of such articles.

Hitherto, hollow heat-recoverable articles have generally been produced by forming a polymer into the desired heat stable configuration, (e. g. by moulding or extrusion, or by seam welding of polymer sheets), simultaneously or subsequently cross-linking the polymer in its heat stable configuration, heating the article to a temperature above the crystalline melting point or softening point of the cross-linked polymer, deforming the article and cooling the article whilst in the deformed state so that the deformed configuration is retained. Examples of such known techniques using seam welding followed by hot deformation, may be found in FR-A-2444392 and FR-A-2114005. In use, since the deformed state of the article is heat unstable, application of heat will cause the article to revert or tend to revert to its original heat stable configuration.

When it is desired to provide such articles with a functional insert, then in general it has hitherto frequently been necessary to provide such inserts after completion of the article on a item-by-item basis e.g. by way of a manual or semi-automatic finishing process. Even when automatic or continuous methods have been available, e.g. internally coated articles produced by coextrusion, such methods are expensive. Frequently, moreover, the hollow articles are of such configuration that they cannot be produced directly by extrusion, for example electrical boots, udders (a term employed herein in a general sense to cover any hollow heat shrinkable article comprising at least three outlets employed in the termination of electrical cables and also commonly referred to as cable «breakouts») or end-caps (a hollow tubular article having a smoothly tapering sealed end) for electric cables, and hitherto such articles have generally been formed into the desired heat stable configuration on an item-by-item basis by moulding, e.g. by injection, compression or transfer moulding techniques. Quite apart from the added expense of such techniques, for complicated shapes, e.g. udders, distortion may be necessary to remove the articles from the moulding pin or core requiring that the articles be resiliently deformable. Furthermore, in order to render such articles heat-recoverable, such moulded parts have in general hitherto been heated and deformed into a heat unstable configuration on an item-by-item basis.

It is an object of the present invention to provide a process of producing hollow heat-recoverable articles provided with a functional insert which obviates or reduces the above-mentioned difficulties.

Accordingly, the present invention provides a process for the production of a hollow heat-recoverable article provided with a functional insert which comprises

a) deforming at least part of a body of fusion bondable polymeric material at a temperature below the softening point of the material to produce heat-recoverable polymeric material preferably having a thickness of at least 0.1 millimetres.

b) disposing the functional insert in contact with an exposed portion of the body,

c) bonding one or more parts of the body to a substrate of fusion bondable polymeric material to produce the configuration of at least one hollow heat recoverable article with the functional insert located therein, and

d) cross-linking the bond-forming parts of the deformed body and the substrate to each other.

Another aspect of the present invention provides a process for the production of a hollow heat-recoverable article provided with a functional insert which comprises

a) deforming at least part of a body of fusion bondable polymeric material at a temperature below the softening point of the material to render the material heat-recoverable,

b) disposing the functional insert in contact with an exposed portion of the body,

c) bonding one or more parts of the body to a substrate of fusion bondable polymeric material to produce the configuration of at least one hollow tubular article heat recoverable substantially only in the radial sense relative to its tubular axis, having the functional insert located therein, and

d) cross-linking the bond-forming parts of the deformed body and the substrate to each other.

These two aspects of the invention may be combined with each other.

The bonding of the body and substrate may be achieved via further bonding material in addition to the body and substrate, which further material is cross-linked with that of the body and substrate.

Preferably, the bonding is effected by fusion of the said polymeric material, preferably in direct contact of the body with the substrate.

By the expression «fusion bonding» as employed herein is meant a process wherein the material in the parts to be bonded together is caused to flow to form the bond, e.g. welding by heat, solvent or ultrasonic or radio frequency energy, preferably with the application of pressure, either to form a homogeneous bridge between the parts in the absence of any discernible interface therebetween or to fuse the parts with further material which is cross-linked with the material of the said parts by the cross-linking step of the process.

The bonding (preferably fusion) step may be effected either before or after the deformation step, preferably however after the deformation step. Bonding before deformation produces the configuration of the article before it is rendered heat recoverable, and care must be taken not to break the bond or lose the insert during the subsequent deformation.

It will be understood that references to «hollow» articles include articles in a flat state which can be opened to reveal their hollow interior, and references to «tubular» articles include multi-legged, tapering, or irregular articles of a generally elongate hollow form, and these terms may refer to articles only part of which is hollow or tubular as aforesaid. The process is applicable to both crystalline and non-crystalline polymers, the softening point (by which is meant the crystalline melting point for crystalline polymers) being selected accordingly as the maximum deformation temperature.

By «fusion bondable» polymeric materials and substrates as employed herein is meant not cross-linked to the extent that the material cannot be readily bonded to itself or to another polymeric component by fusing. In general, the level of cross-linking in the polymeric material expressed in terms of gel content (ANSI/ASTM D2765-68) is preferably less than 40%, more preferably less than 20%, particularly less than 5%. When cross-linking in accordance with the process, preferably gel contents of at least 40%, e.g. at least 50%, particularly at least 65% are attained.

Preferably, the cross-linking cross-links substantially all of the polymeric material in addition to the bond-forming material. Cross-linking is preferably performed after the deforming and bonding steps, but could be effected after the deformation step and during the bonding step. Of particular interest is a process wherein the said substrate to which part of the said body is bonded is another part of the said body, in which case the body may be in the form of a web which is expanded longitudinally by the deformation step. Also of interest is a process wherein the said substrate to which part of the said body is bonded is initially separate from the said body, in which case both the body and the substrate may be in the form of a web and both may be longitudinally expanded by the deformation step. The process may be performed so as to provide a plurality of separable hollow heat-recoverable articles each having a functional insert located therein with cross-linking effected before or after separating the articles.

In a further preferred process the deforming step locally deforms at least one substantial region of the said body, the said substrate is locally deformed in at least one substantial region at a temperature below the softening point of the material to render it heat recoverable, and the body is bonded to the substrate with their respective deformed regions co-operating with each other to produce hollow said article(s). Vacuum forming of a web of polymeric material is the preferred method of performing the localised deformation.

Hollow heat-recoverable articles produced by the process of the invention also form part of the present invention.

One advantage of the articles of the invention is that they are substantially recoverable, e.g. to at least 50% of their maximum extent, at a temperature below the crystalline melting point or softening point of the polymeric material from which they have been produced, e.g. in the range 60 °C to the crystalline melting point or softening point.

The process is particularly useful in the manufacture of heat-recoverable boots, transitions, solder connector sleeves, udders and end-caps for electrical applications, e.g. electrical cables, the use of such products being extensive and well reported in the literature e.g. Proc. IEE 1970j, 117(7), 1365–1372. Such products may, for example, be provided with a functional insert in the form of an adhesive, sealant, or electrically semiconducting coating or liner or a quantity of solder in accordance with the process of the invention by welding together at least two super-imposed flaps of a single folded pre-stretched polymeric web after having been pre-coated lined or otherwise provided with a functional insert material. The polymeric material may be deformed in any direction which will provide the desired direction of recovery in the final product which, espacially in the case of boots, transitions, sleeves, udders and end-caps, is preferably substantially only radially inward shrinkage in relation to the substrate to which they are applied, that is in the substantial absence of shrinkage longitudinally (e.g. less than 10% longitudinal shrinkage when fully radially recovered) in relation to said substrate. Such shrinkage may be achieved by mono-axial deformation of the polymeric material.

In the production of heat-recoverable articles in accordance with the invention, it is not always necessary to deform the whole of the non-cross-linked polymeric starting material. For example, when employing polymeric material in the form of a web, it is possible locally to deform specific areas of the web, for example by pressing or by vacuum forming at an elevated temperature below the crystalline melting point or softening point of the material with subsequent cooling to maintain the deformed condition of the deformed components so formed. Such deformed components may then be fused to other components, for example to a similar component formed in a separate web, to produce the configuration of the desired product.

The functional insert may comprise any material that is desired to be located internally of the hollow heat-recoverable article to perform any desired function. One type of insert is fusible at or around the recovery temperature of the article, e.g. a hot-melt adhesive, or a solder insert, as described for example in UK Patent Nos. 1 062 043, 1 062 709, 1 062 870, 1 098 304 and 1 149 125. A second type of insert is a sealant, e.g. a highly viscous liquid, paste or gease, as described for example, in UK Patent Nos. 1 116 878 and 1 116 879. A third type of insert is a barrier, e.g. a water barrier such as an aluminium foil liner. A fourth type of insert is an electrical screen, for example, a liner in the form of an electrically conduction braid or foil.

The manner in which the functional insert is disposed on the deformed polymeric material will naturally depend on the type of insert employed. In the case where the insert is an adhesive or sealant coating, the coating may be applied to the whole of the deformed polymeric material and the adhesive or sealant in the regions to be fused together displaced, e.g. by local heating and application off pressure.

If self-adhesion of adhesive or sealant-coated contacting parts is a problem, then such parts may be separated by a non-adherable material such as release paper.

Any cross-linkable polymeric material to which the property of dimensional recoverability may be imparted such as those disclosed in U.K. Specification No. 990 235 may be used to form the articles. Polymers which may be used in the polymeric material include polyolefins such as polyethylene and polypropylene, and ethylene copolymers, for example with propylene, butene, hexene, octene, vinyl acetate or other vinyl esters or methyl or ethyl acrylate, polyamides, polyurethanes, polyvinyl chloride, polyvinylidine fluoride, or other fluorinated polymers or copolymers, e.g. Tefzel (trade name – commercially available from Dupont), elastomeric materials such as those disclosed in UK specification No. 1 010 064 and blends such as those disclosed in UK specification Nos. 1 284 082 and 1 294 665. The polymeric materials can be tailored to suit the intended use by the addition of fillers, e.g. semiconducting fillers or anti-tracking agents, flame retardants, plasticisers, pigments, stabilisers and lubricants, or where necessary, e.g. where the polymeric material is substantially non-crystalline, a hold-out agent such as a thermoplastic polymer, e.g. polyethylene, may be included in the material.

The polymeric material may be cross-linked by irradiation, for example, by means of an electron beam of by γ-radiation or it may be chemically cross-linked. Whichever cross-linking process is used, it may be advantageous to incorporate one or more co-curing agents for example polyunsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical cross-linking that may be used in the process according to the invention involves grafting and unsaturated hydrolysable silane on the polymer and subjecting the article to moisture during a curing stage, for example, as described in UK Patent specification Nos. 1 286 460 and 1 357 549.

Any of the techniques conventionally employed for fusing together polymeric materials may be employed in the process of the present invention, e.g. radio frequency, ultrasonic or hot bar welding, and pressure may additionally be applied to ensure a satisfactory bond. Furthermore, it is possible to make use of the fusing operation to separate the articles one from another or from surplus polymeric starting material. For example, it is possible to use a heating/cutting device such as a hot wire cutter or a laser beam, if necessary in association with pressure applying means such as a roller.

As hereinbefore described, the process is particularly appropriate in the production of hollow heat-recoverable articles for use in the electrical field, e.g. boots, transitions, sleeves, udders and end-caps. In general, such products are characterised by a wall thickness before heat-recovery thereof of preferably from 0.1 to 5 mm, especially from 0.5 to 3 mm e.g. 1 to 3 mm.

Specific embodiments of the process of the invention will now be described by way of example with specific reference to the accompanying drawings wherein:

Figure 1 is a schematic top view of an assembly of separable heat-recoverable udders for the termination of an electrical cable.,

Figure 2 is a diagrammatic isometric view of an udder produced from the assembly shown in Figure 1,

Figure 3 is a schematic top view of an assembly of separable heat-recoverable boots employed for sealing an electrical cable at the termination thereof,

Figure 4 is a diagrammatic isometric view of a boot produced from the assembly of Figure 3,

Figure 5 is a schematic top view of an alternative assembly of separable heat-recoverable boots from which the boot of Figure 4 may be produced,

Figure 6 is a schematic top view of an assembly of separable heat-recoverable end-caps employed for sealing the ends of electrical cables,

Figure 7 is an isometric view of an end cap produced from the assembly of Figure 6,

Figure 8 is a schematic isometric view of a polymeric web of material that has been locally deformed to produce a heat-recoverable transition for an electrical cable,

Figure 9 is an isometric view of a boot produced from the assembly of Figure 8,

Figure 10 is an isometric view of a right angle electrical boot produced in analogous manner to that depicted in Figure 8,

Figure 11 is an isometric view of a 2-legged udder produced in analogous manner to that depicted in Figure 8,

Figure 12 is an exploded isometric view of a heat-recoverable solder containing sleeve assembly, and

Figure 13 is an isometric view of the connector assembly of Fig. 12.

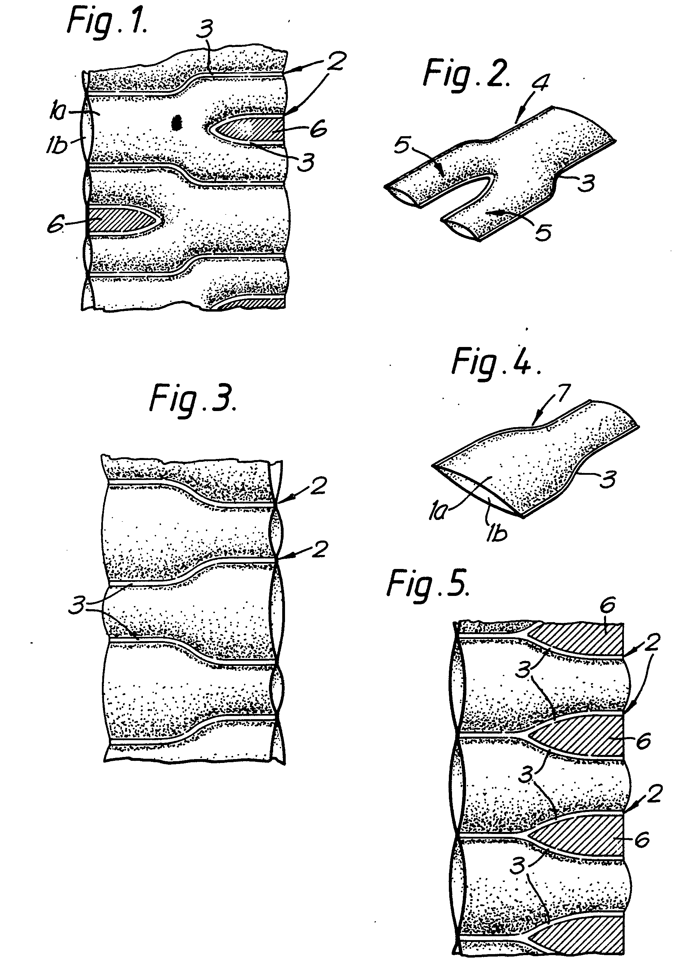

In the embodiment shown in Figures 1 and 2, a pair of polyethylene sheets 1 which have been expanded longitudinally to 3 times their original length at a temperature of 100 °C, coated with a hot-melt adhesive which is insensitive to the subsequent irradiation treatment (see below) and cooled whilst in the expanded condition, are superimposed one on the other and welded at positions 2 transversely of the tube through the hot-melt adhesive. The regions of the sheets at positions 2 to be welded together are locally preheated and pressed together by suitably located heated rollers causing the adhesive to be displaced from the region to be welded to produce seams 3.. The welded sheets are then irradiated in an electron beam at a dosage of 15 Mrads causing cross-linking of the polyethylene. After cross-linking the assembly is severed along the weld seams 3 employing a mechanical cutter to produce a plurality of heat-recoverable electrical udders 4 each having two legs 5 defined by the welds 3. The areas depicted by reference numeral 6 are discarded.

Such udders may be employed in the electrical termination of a cable comprising two primary wires by heat recovering the udder about the end of the cable, the primary wires passing through the legs of the udder.

In analogous manner to that described in relation to the first embodiment the transitions and end-caps shown in Figures 3, 4 and 5 and Figures 6 and 7 respectively are produced, hereinafter the same reference numerals being employed for analogous parts.

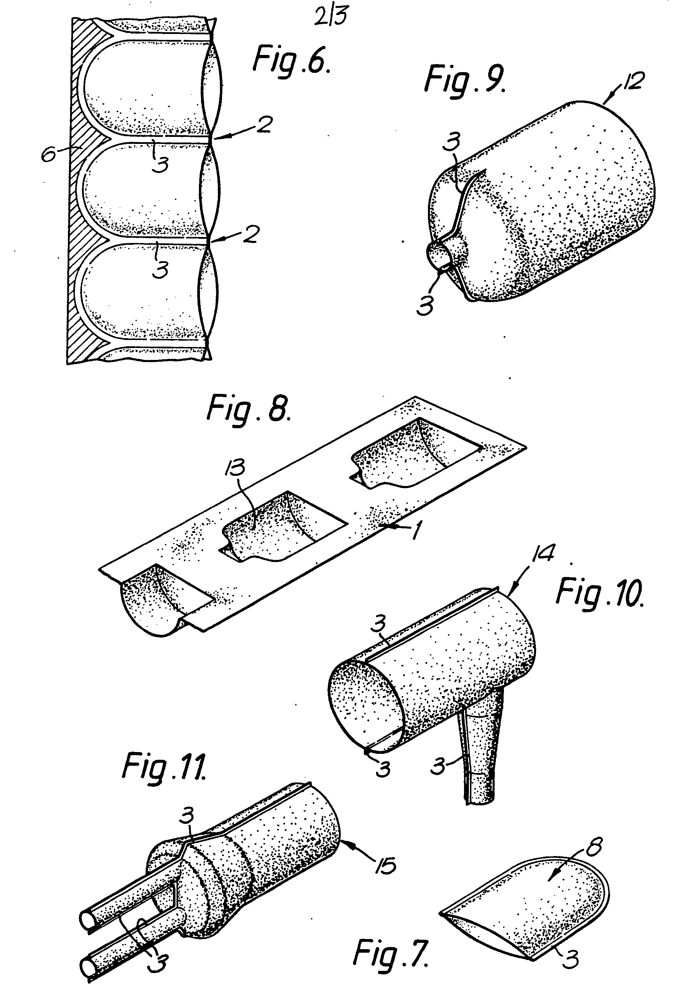

In the embodiment shown in Figure 9, electrical boots 12 are produced from non-crocc-linked radially expanded polyethylene tubing (produced as described in the preceding embodiment), the boots being profiled by welding to produce welded seams 3 and severing along the weld seams 3 to separate the boots from the superfluous regions. The profiled tube is then subjected to electron irradiation as hereinbefore described and subsequently severed transversely to produce the individual boots as shown in Figure 9.

In the embodiment shown in Figure 8, an alternative method of producing the boots of Figure 9 is illustrated. In this embodiment a sheet of non-cross-linked non-expanded polyethylene 1 is heated to a temperature of 100° and passed over a series of vacuum moulds. After application of vacuum, the sheet is impressed with a plurality of expanded areas 13 corresponding in shape to one half of the boot to be produced. The interior of the boot half is then coated with a hot-melt adhesive and after cooling, the sheet is removed from the mould and superimposed on a similarly processed sheet of complimentary form such that the half-boots of one sheet are in register with the half-boots of the other. Each complimentary and registering pair of half-boots are thereafter welded together and the whole boots so formed are separated from the surrounding area by severing along the welds and also across the ends to produce the transitions in their final form (not shown). The articles so formed are thereafter irradiated in an electron beam as hereinbefore described.

By employing appropriate vacuum moulds and similar adhesive coating methods, the electrical boots of Figure 10 and the two legged udders of Figure 11 are produced.

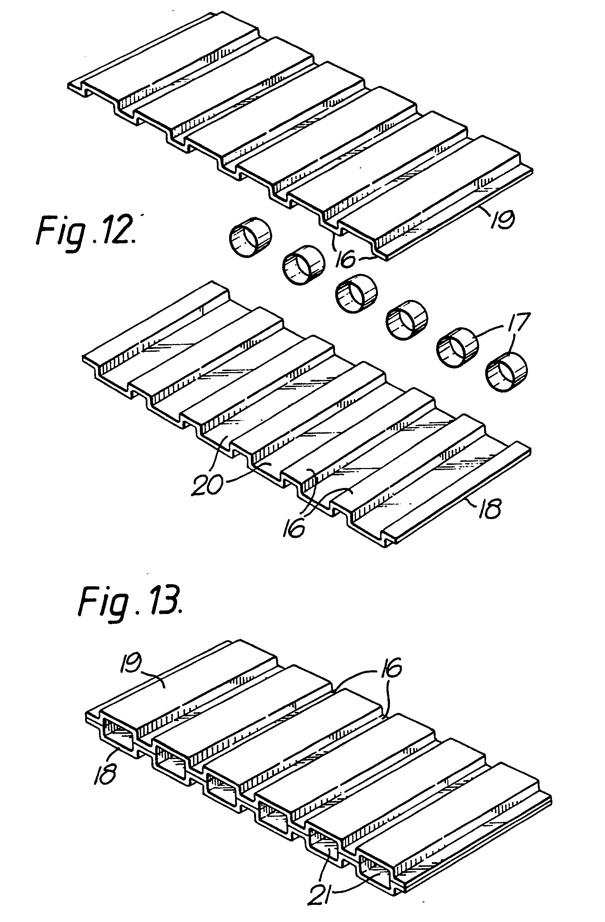

In the embodiment depicted in Figures 12 and 13, a heat-recoverable solder containing flat cable connector analogous to that described in UK Patent 1 334 556 is produced from two substantially non-cross-linked polyethylene sheets 18 and 19 which have been deformed by stretching to 3 times their original length and then corrugated by thermoforming at this temperature with subsequent rapid cooling. In each channel 20 so defined in one sheet 18 is placed a ring of pre-fluxed solder maintained in position by a small quantity of pressure sensitive adhesive (not shown) and thereafter the other sheet 19 is superimposed on the lower sheet such that the peaks 16 of the corrugation of one sheet are in register with those of the other sheet to define a series of parallel interlinked solder containing sleeves 21. The sheets 18 and 19 are then welded together along the contacting peaks 16 employing an ultrasonic welding tool to produce the assembly in Figure 12.

In a modification of the preceding embodiment, the solder rings are not provided, the channels 20 being coated with a hot-melt adhesive. In this manner, a very efficient and simple manner of producing adhesive coated sleeves is provided. If desired, the sleeves may be separated one from another by severing along the weld seams employing a conventional cutting tool.

In each of the preceding embodiments, the wall thickness of the polyethylene after deformation may be 0,1 mm 0,5 mm, 1.0 mm, 1,5 mm, 2,0 mm, 2,5 mm, 3,0 mm, 3,5 mm, 4,0 mm, 4,5 mm and 5,0 mm with similar results.

## Claims

1. A process for the production of a hollow heat-recoverable article provided with a functional insert which comprises

a) deforming at least part of a body of fusion bondable polymeric material at a temperature below the softening point of the material to render it heat-recoverable,

b) disposing the functional insert in contact with an exposed portion of the body,

c) bonding one or more parts of the body to a substrate of fusion bondable polymeric material to produce the configuration of at least one hollow heat recoverable article with the functional insert located therein, and

d) cross-linking the bond forming parts of the deformed body and the substrate to each other.

2. A process according to claim 1 wherein the body is deformed and bonded to produce at least one tubular article recoverable substantially only in the radial sense relative to its tubular axis.

3. A process according to claim 1 or 2, wherein the heat-recoverable material is at least 0,1 millimetres thick.

4. A process according to any of claims 1 to 3 wherein the bonding is effected by fusion of the said polymeric material.

5. A process according to any of claims 1 to 4 wherein the bond-forming material includes further material in addition to the said body and the said substrate and the cross-linking cross-links the said further material with that of the said body and the said substrate.

6. A process according to any of the preceding claims, wherein the cross-linking cross-links substantially all of the said polymeric material in addition to the bond-forming material.

7. A process according to any of the preceding claims wherein the cross-linking is effected after the deforming and bonding steps.

8. A process according to any of claims 1 to 6 wherein the cross-linking is effected after the deforming step and during the bonding step.

9. A process according to any of claims 1 to 7 wherein the bonding step is performed after the deforming step.

10. A process according to any of the preceding claims, wherein the fusion bondable polymeric material before the cross-linking step has a gel content as measured by test method ANSI/ASTM D2765-68 of less than 5%.

11. A process according to any of the preceding claims, wherein the said substrate to which part of the said body is bonded is another part of the said body.

12. A process according to claim 11 wherein the said body is in the form of a web and the deforming step expands the web longitudinally.

13. A process according to any of claims 1 to 10 wherein the said substrate to which part of the said body is bonded is initially separate from the said body.

14. A process according to claim 13 wherein the said body is in the form of a web and the said substrate is in the form of a web.

15. A process according to claim 14 wherein the deforming step expands the said body longitudinally and the said substrate is similarly expanded.

16. A process according to any of claims 1 to 15, wherein the deforming step locally deforms at least one region of the said body, the said substrate is locally deformed in at least one region at a temperature below the softening point of the material to render it heat recoverable, and the body is bonded to the substrate with their respective deformed regions co-operating with each other to produce the said article(s).

17. A process according to any of the preceding claims wherein the functional insert comprises an adhesive, sealant, conductive or semi-conductive composition or a quantity of solder.

18. A heat-recoverable article provided with a functional insert comprising a body of polymeric material which has been deformed at a temperature below the softening point of the material to render the material heat-recoverable, one or more parts of the body being bonded to a substrate of polymeric material to form the said article with the functional insert located therein and the bond-forming parts of the body and the substrate being cross-linked to each other.

19. A heat-recoverable article according to claim 18 which is of hollow tubular form and is heat-recoverable substantially only in the radial sense relative to its tubular axis.

20. An article according to claim 18 or 19 wherein the body and the substrate are fusion bonded to each other or to further material which is cross-linked to the material of the body and the substrate.

21. An article according to any of claims 18 to 20 in which substantially all of the said polymeric material has been cross-linked.

22. An article according to any of claims 18 to 21 wherein the substrate to which part of the said body is bonded is another part of the said body.

23. An article according to any of claims 18 to 21 wherein the substrate to which part of the said body is bonded is discrete from the said body.

24. An article according to any of claims 18 to 23 wherein the body and the substrate have each been locally deformed in at least one region at a temperature below the softening point of the material to render the material heat-recoverable and are bonded to each other with their respective deformed regions co-operating with each other to provide one or more hollow said articles.

25. An article according to any of claims 18 to 24 wherein the functional insert comprises an adhesive, sealant, conductive or semi-conductive composition, or a quantity of solder.

26. An article according to any of claims 18 to 25 wherein the polymeric material in the deformed state has a thickness within the range from 0.1 to 5.0 millimetres.

**Patentansprüche**

1. Verfahren zur Herstellung eines hohlen wärmeschrumpfbaren Artikels mit einer Funktionseinlage, das umfasst

a) Verformen von mindestens einem Abschnitt eines Hauptteils eines schmelzverschweissbaren Polymermaterials bei einer unterhalb des Erweichungspunktes des Materials liegenden Temperatur, um es wärmeschrumpfbar zu machen,

b) Inkontaktbringen der Funktionseinlage mit einem freiliegenden Abschnitt des Hauptteils,

c) Verbinden von mindestens einem Abschnitt des Hauptteils mit einem Substrat von schmelzverschweissbarem Polymermaterial, um die Gestalt von mindestens einem hohlen wärmeschrumpfbaren Artikel mit darin befindlicher Funktionseinlage herzustellen, und

d) Vernetzen der die Verbindung bildenden Abschnitte des verformten Hauptteils und des Substrats miteinander.

2. Verfahren nach Anspruch 1, wobei der Hauptteil verformt und verschweisst wird, um mindestens einen rohrförmigen Artikel herzustellen, der schrumpfbar im wesentlichen nur in radialer Richtung bezüglich seiner Rohrachse ist.

3. Verfahren nach Anspruch 1 oder 2, wobei das wärmeschrumpfbare Material mindestens 0,1 mm stark ist.

4. Verfahren nach einem der Ansprüche 1 bis 3, wobei das Verbinden durch Schmelzen des Polymermaterials herbeigeführt wird.

5. Verfahren nach einem der Ansprüche 1 bis 4, wobei das das Verbinden herbeiführende Material weiteres Material zusätzlich zu dem Hauptteil und dem Substrat einschliesst und beim Vernetzen das weitere Material mit demjenigen des Hauptteils und des Substrats vernetzt wird.

6. Verfahren nach einem der vorhergehenden Ansprüche, wobei beim Vernetzen praktisch das gesamte Polymermaterial zusätzlich zu dem das Verbinden herbeiführenden Material vernetzt wird.

7. Verfahren nach einem der vorhergehenden Ansprüche, wobei das Vernetzen nach der Verformungsphase und der Verbindungsphase vorgenommen wird.

8. Verfahren nach einem der Ansprüche 1 bis 6, wobei das Vernetzen nach der Verformungsphase und während der Verbindungsphase vorgenommen wird.

9. Verfahren nach einem der Ansprüche 1 bis 7, wobei das Verbinden nach der Verformungsphase vorgenommen wird.

10. Verfahren nach einem der vorhergehenden Ansprüche, wobei das schmelzverschweissbare Polymermaterial vor der Vernetzungsphase einen Gel-Gehalt von weniger als 5% aufweist, gemessen nach der Prüfmethode ANSI/ASTM D2765-68.

11. Verfahren nach einem der vorhergehenden Ansprüche, wobei das Substrat, mit dem ein Abschnitt des Hauptteils verschweisst wird, einen anderen Abschnitt dieses Hauptteils darstellt.

12. Verfahren nach Anspruch 11, wobei der Hauptteil bahnförmig ist und die Bahn in der Verformungsphase in Längsrichtung gedehnt wird.

13. Verfahren nach einem der Ansprüche 1 bis 10, wobei das Substrat, mit dem ein Abschnitt des Hauptteils verbunden wird, zunächst getrennt von dem Hauptteil vorliegt.

14. Verfahren nach Anspruch 13, wobei der Hauptteil bahnförmig ist und das Substrat bahnförmig ist.

15. Verfahren nach Anspruch 14, wobei der Hauptteil in der Verformungsphase in Längsrichtung gedehnt wird und das Substrat in entsprechender Weise gedehnt wird.

16. Verfahren nach einem der Ansprüche 1 bis 15, wobei in der Verformungsphase mindestens ein Bereich des Hauptteils verformt wird, das Substrat in mindestens einem Bereich bei einer unter dem Erweichungspunkt des Materials liegenden Temperatur örtlich verformt wird, um es wärmeschrumpfbar zu machen, und der Hauptteil und das Substrat mit ihren jeweiligen verformten Bereichen in gegenseitigem Zusammenwirken verbunden werden, um den (die) Artikel herzustellen.

17. Verfahren nach einem der vorhergehenden Ansprüche, wobei die Funktionseinlage einen Kleber, eine Abdichtung, eine leitende oder halbleitende Verbindung oder ein Quantum Lot umfasst.

18. Wärmeschrumpfbarer Artikel, versehen mit einer Funktionseinlage, umfassend einen Hauptteil aus Polymermaterial, der bei einer unterhalb des Erweichungspunkts des Materials liegenden Temperatur verformt worden ist, um das Material wärmeschrumpfbar zu machen, wobei mindestens ein Abschnitt des Hauptteils mit einem Substrat aus Polymermaterial verbunden ist, um den Artikel mit der darin befindlichen Funktionseinlage herzustellen, und die die Verbindung herstellenden Abschnitte des Hauptteils und des Substrats miteinander vernetzt sind.

19. Wärmeschrumpfbarer Artikel nach Anspruch 18, der eine hohle Rohrform besitzt und im wesentlichen nur in radialer Richtung bezüglich seiner Rohrachse wärmeschrumpfbar ist.

20. Artikel nach Anspruch 18 oder 19, wobei der Hauptteil und das Substrat miteinander oder mit weiterem Material schmelzverschweisst sind, das mit dem Material des Hauptteils und des Substrats vernetzt ist.

21. Artikel nach einem der Ansprüche 18 bis 20, bei dem im wesentlichen das gesamte Polymermaterial vernetzt ist.

22. Artikel nach einem der Ansprüche 18 bis 21, wobei das Substrat, mit dem ein Abschnitt des Hauptteils verbunden ist, ein weiterer Abschnitt des Hauptteils ist.

23. Artikel nach einem der Ansprüche 18 bis 21, wobei das Substrat, mit dem ein Abschnitt des Hauptteils verbunden ist, getrennt von dem Hauptteil vorliegt.

24. Artikel nach einem der Ansprüche 18 bis 23, wobei der Hauptteil und das Substrat jeweils örtlich in mindestens einem Bereich bei einer unter der Erweichungstemperatur des Materials liegenden Temperatur verformt sind, um das Material wärmeschrumpfbar zu machen, und mit ihren jeweiligen verformten, miteinander zusammenwirkenden Bereichen miteinander verbunden sind, um mindestens einen hohlen Artikel zu bilden.

25. Artikel nach einem der Ansprüche 18 bis 24, wobei die Funktionseinalge einen Kleber, eine Abdichtung, eine leitende oder halbleitende Verbindung oder ein Quantum Lot umfasst.

26. Artikel nach einem der Ansprüche 18 bis 25, wobei das Polymermaterial im verformten Zustand eine Dicke zwischen 0,1 und 5,0 mm hat.

**Revendications**

1. Un procédé de production d'articles à reprise thermique creux munis d'un insert fonctionnel qui consiste à: a) déformer au moins une partie d'un corps de matière polymère assemblable par fusion à une température inférieure au point de ramollissement de la matière pour la rendre à reprise thermique b) disposer l'insert fonctionnel en contact avec une partie exposée du corps; c) assembler une ou plusieurs partie(s) du corps à un substrat d'une matière polymère assemblable par fusion pour produire la configuration d'au moins un article à reprise thermique creux dans lequel l'insert fonctionnel est logé, et d) réticuler les parties formant joints du corps déformé et du substrat les unes aux autres.

2. Un procédé selon la revendication 1, dans lequel le corps est déformé et assemblé pour produire au moins un article tubulaire à reprise thermique sensiblement uniquement dans le sens radial, relativement à son axe tubulaire.

3. Un procédé selon la revendication 1 ou 2, dans lequel la matière à reprise thermique est d'une épaisseur d'au moins 0,1 mm.

4. Un procédé selon l'une quelconque des revendications 1 à 3, dans lequel l'assemblage est exécuté par fusion de ladite matière polymère.

5. Un procédé selon l'une quelconque des revendications 1 à 4, dans lequel la matière formant joint comprend une autre matière en supplément dudit corps et dudit substrat et la réticulation réticule ladite autre matière avec celle dudit corps et dudit substrat.

6. Un procédé selon l'une quelconque des revendications précédentes, dans lequel la réticulation réticule sensiblement la totalité de ladite matière polymère en supplément de la matière formant joint.

7. Un procédé selon l'une quelconque des revendications précédentes, dans lequel la réticulation est effectuée après les phases de déformation et d'assemblage.

8. Un procédé selon l'une quelconque des revendications 1 à 6, dans lequel la réticulation est exécutée après la phase de déformation et pendant la phase d'assemblage.

9. Un procédé selon l'une quelconque des revendications 1 à 7, dans lequel la phase d'assemblage est exécutée après la phase de déformation.

10. Un procédé selon l'une quelconque des revendications précédentes, dans lequel la matière polymère pouvant être assemblée par fusion avant la phase de réticulation possède une teneur en gel, mesurée par la méthode d'essai ANSI/ASTM D2765-68, de moins de 5%.

11. Un procédé selon l'une quelconque des revendications précédentes, dans lequel ledit substrat auquel une partie dudit corps est assemblée est une autre partie dudit corps.

12. Un procédé selon la revendication 11, dans lequel ledit corps est sous la forme d'une bande et la phase de déformation étire la bande longitudinalement.

13. Un procédé selon l'une quelconque des revendications 1 à 10, dans lequel ledit substrat auquel une partie dudit corps est assemblée est initialement séparé dudit corps.

14. Un procédé selon la revendication 13, dans lequel ledit corps est sous la forme d'une bande et ledit substrat est sous la forme d'une bande.

15. Un procédé selon la revendication 14, dans lequel la phase de déformation étire ledit corps longitudinalement et ledit substrat est étiré de façon analogue.

16. Un procédé selon l'une quelconque des revendications 1 à 15, dans lequel la phase de déformation déforme localement au moins une région dudit corps, ledit substrat est déformé localement dans au moins une région à une température inférieure au point de ramollissement de la matière pour le rendre à reprise thermique et le corps est assemblé au substrat, les régions déformées respectives du corps et du substrat coopérant entre elles pour produire ledit ou lesdits article(s).

17. Un procédé selon l'une quelconque des revendications précédentes, dans lequel l'insert fonctionnel comprend un adhésif, une matière d'étanchéité, une composition conductrice ou semiconductrice ou une quantité de soudure.

18. Un article à reprise thermique muni d'un insert fonctionnel comprenant un corps de matière polymère qui a été déformé à une température inférieure au point de ramollissement de la matière pour rendre la matière à reprise thermique, une ou plusieurs pártie(s) du corps étant assemblée(s) à un substrat de matière polymère pour former ledit article dans lequel l'insert fonctionnel est logé et les parties formant joints du corps et du substrat étant réticulées l'une sur l'autre.

19. Un article à reprise thermique selon la revendication 18, qui est de forme creuse tubulaire et est à reprise thermique sensiblement seulement dans le sens radial relativement à son axe tubulaire.

20. Un article selon la revendication 18 ou 19, dans lequel le corps et le substrat sont assemblés par fusion l'un à l'autre ou à une autre matière qui est réticulée sur la matière du corps et du substrat.

21. Un article selon l'une quelconque des revendications 18 à 20, dans lequel sensiblement la totalité de ladite matière polymère a été réticulée.

22. Un article selon l'une quelconque des revendications 18 à 21, dans lequel le substrat auquel la partie dudit corps est assemblée est une autre partie dudit corps.

23. Un article selon l'une quelconque des revendications 18 à 21, dans lequel le substrat auquel une partie dudit corps est assemblée est distinct dudit corps.

24. Un article selon l'une quelconque des revendications 18 à 23, dans lequel le corps et le substrat ont été chacun déformés localement dans au moins une région à une température inférieure au point de ramollissement de la matière pour rendre la matière à reprise thermique et sont assemblés l'un à l'autre, leurs régions déformées respectives coopérant l'une avec l'autre pour former un ou plusieurs desdits articles creux.

25. Un article selon l'une quelconque des revendications 18 à 24, dans lequel l'insert fonctionnel comprend un adhésif, une matière d'étanchéité, une composition conductrice ou semiconductrice, ou une quantité de soudure.

26. Un article selon l'une quelconque des revendications 18 à 25, dans lequel la matière polymère présente, à l'état déformé, une épaisseur comprise dans l'intervalle allant de 0,1 à 5,0 millimètres.

**Fig.1.**

**Fig.2.**

**Fig.3.**

**Fig.4.**

**Fig.5.**

Fig.6.

Fig.9.

Fig.8.

Fig.10.

Fig.11.

Fig.7.

Fig.12.

19

16

17

20

16

18

Fig.13.

19

16

18

21